# EUROPEAN PATENT SPECIFICATION

(11) **EP 3 823 326 B1**
(45) Date of publication and mention of the grant of the patent: **10.05.2023**
(21) Application number: 20188115.8
(22) Date of filing: 28.07.2020
(51) Int. Cl.: H04L 9/40, H04W 12/122, H04W 4/80

(54) **SYSTEM AND METHOD FOR DETECTING BLUETOOTH SECURITY THREAT, AND COMPUTER READABLE MEDIUM THEREFOR**
SYSTEM UND VERFAHREN ZUR ERKENNUNG VON BLUETOOTH-SICHERHEITSBEDROHUNGEN UND COMPUTERLESBARES MEDIUM DAFÜR
SYSTÈME ET PROCÉDÉ DE DÉTECTION DE MENACES À LA SÉCURITÉ BLUETOOTH ET SUPPORT LISIBLE PAR ORDINATEUR ASSOCIÉ

(30) Priority: 14.11.2019 KR 20190146021
(43) Date of publication of application: 19.05.2021
(73) Proprietor: Norma Inc., Seoul (KR)
(72) Inventor: JUNG, Hyunchul, Seoul (KR); SONG, Chang Nyoung, Seoul (KR)
(74) Representative: Grünecker Patent- und Rechtsanwälte PartG mbB

(56) References cited:
- EP-A1- 3 148 237
- EP-A1- 3 342 201
- EP-B1- 3 342 201
- YUE ZHANG ET AL: "On the (In)security of Bluetooth Low Energy One-Way Secure Connections Only Mode", ARXIV.ORG, CORNELL UNIVERSITY LIBRARY, 201 OLIN LIBRARY CORNELL UNIVERSITY ITHACA, NY 14853, 28 August 2019 (2019-08-28), XP081498197,
- CHRISTOPHER HENSLER ET AL: "Using bluetooth low energy spoofing to dispute device details", SECURITY AND PRIVACY IN WIRELESS AND MOBILE NETWORKS, ACM, 2 PENN PLAZA, SUITE 701NEW YORKNY10121-0701USA, 15 May 2019 (2019-05-15), pages 340-342, XP058437343, DOI: 10.1145/3317549.3326321 ISBN: 978-1-4503-6726-4

## Description

### BACKGROUND

### 1. Field

The present disclosure relates to a system and a method for detecting a Bluetooth security threat, and a computer-readable medium having a program recorded thereon to execute the method in a computer.

### [National Research and Development Business Supporting the Present Disclosure]

[Project Number] 2019-0-00148
[Related Department] Ministry of Science and ICT
[Research Management Specialized Agency] Institute of Information & Communications Technology Planning & Evaluation (IITP)
[Research Business Title] Information Protection Core Source Business
[Research Project Title] Development of Smartphone-Associated Touch Operation System Double Convergence Security Technology for Controlling Autonomous Car
[Contribution Rate] 1/1
[Lead Institute] SAMBOMOTORS CO., LTD.
[Research Period] April 1, 2019-December 31, 2022

### 2. Description of the Related Art

Bluetooth refers to technology standards that wirelessly connect portable devices including portable PCs or mobile phones within a narrow range. For example, Bluetooth supports to enable various digital devices to exchange voices and data by using a radio frequency of an industrial scientific medical band of 245 MHz, without a physical cable. For example, a module for Bluetooth communication may be embedded in a mobile communication terminal or a laptop computer to support wireless communication. Due to such convenience, Bluetooth is used in almost all of digital devices including personal digital assistants (PDAs), desktop computers, facsimile machines, keyboards, or joysticks.

EP 3 148 237 A1 discloses a method for monitoring attacks on a beacon transmitter belonging to a set of beacon transmitters that are able to communicate with each other. A beacon transmitter is able to generate a reset message (RMes), containing specific values for a universally unique identifier, a major identifier and a minor identifier. The specific values of the major identifier and the minor identifier indicate that the reset message is intended for replacing the current value of the universally unique identifier of other beacon transmitters (BT) by the specific value of the universally unique identifier, if a received advertisement message broadcast from an entity (ME) is similar to an advertisement message broadcast by the beacon transmitter.

YUE ZHANG ET AL: "On the (In)security of Bluetooth Low Energy One-Nay Secure Connections Only Mode", ARXIV.ORG, CORNELL UNIVERSITY LIBRARY, 201 OLIN LIBRARY CORNELL UNIVERSITY ITHACA, NY 14853, 28 August 2019 (2019-08-28) relates to security vulnerabilities against both mobiles and their peer Bluetooth Low Energy (BLE) devices.

CHRISTOPHER HENSLER ET AL: "Using bluetooth low energy spoofing to dispute device details", SECURITY AND PRIVACY IN WIRELESS AND MOBILE NETWORKS, ACM, 2 PENN PLAZA, SUITE 701NEN YORKNY10121-0701USA, 15 May 2019 (2019-05-15), pages 340-342 discloses the effects of multiple Bluetooth Low Energy spoofing attacks, including a novel cache poisoning attack.

It is the object of the present invention to provide an improved method for detecting security threats in an efficient and precise manner.

This object is solved by the subject matter of the independent claims.

### Embodiments are defined by the dependent claims.

An embodiment of the present disclosure provides a Bluetooth security threat detection system in a computer.

An embodiment of the present disclosure provides a Bluetooth security threat detection method in a computer.

An embodiment of the present disclosure provides a computer-readable medium having a program recorded thereon to execute a Bluetooth security threat detection method in a computer.

According to an embodiment, in a computer readable medium having a program recorded thereon to execute a Bluetooth security threat detection method in a computer, the Bluetooth security threat detection method may include: a step of collecting Bluetooth packets transmitted from devices; a searching step of comparing information included in Bluetooth packets collected at the same time period from among the collected Bluetooth packets, and finding Bluetooth packets (device name duplication Bluetooth packets) having a same device name; and a step of calculating an index (degree of risk) indicating a degree of risk of a risky device, with respect to each of the devices which transmit the Bluetooth packets, based on a result of the searching step.

In the above-described Bluetooth security threat detection method, the step of calculating the degree of risk may include an operation (first operation) of increasing a degree of risk of at least one device from among devices (device name duplication devices) which transmit the device name duplication Bluetooth packets.

According to one or more embodiments of the present disclosure, users using Bluetooth devices can safely access and use the Bluetooth devices.

According to one or more embodiments of the present disclosure, devices which may threaten security when Bluetooth devices are connected can be detected in advance.

### BRIEF DESCRIPTION OF THE DRAWINGS

The above and/or other aspects of the present disclosure will be more apparent by describing certain exemplary embodiments of the present disclosure with reference to the accompanying drawings, in which:
FIG. 1 is a view provided to explain a Bluetooth security threat detection system according to an embodiment of the present disclosure;
FIG. 2 is a view provided to explain a Bluetooth security threat detection method according to an embodiment of the present disclosure; and
FIG. 3 is a view illustrating a result of testing a relationship between a Bluetooth received signal strength indicator (RSSI) value and a distance.

### DETAILED DESCRIPTION OF EMBODIMENTS

Exemplary embodiments will now be described more fully with reference to the accompanying drawings to clarify objects, other objects, features and advantages of the present disclosure. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art.

### Definition of Terms

In the detailed descriptions of the present disclosure, the term "software" refers to technology for moving hardware in a computer, the term "hardware" refers to apparatuses or devices (a central processing unit (CPU), a memory 203, an input device, an output device, a peripheral device, etc.) constituting a computer, the term "step" refers to a series of processes or operations connected with one another in a time-series manner to achieve a predetermined object, the term "program" refers to a set of commands suitable to be processed by a computer, and the term "program recording medium" refers to a computer-readable recording medium that has a program recorded thereon and is used to install and execute or distribute a program.

If the terms such as "first" and "second" are used to describe elements, these elements should not be limited by such terms. These terms are used for the purpose of distinguishing one element from another element only. The exemplary embodiments include their complementary embodiments.

In the detailed descriptions of the present disclosure, the singular forms "a," "an" and "the" are intended to include the plural forms as well, unless the context clearly indicates otherwise. It will be further understood that the terms "comprise" and/or "comprising," when used in this specification, do not preclude the presence or addition of one or more other components.

In the detailed descriptions of the present disclosure, the term "management" is used as a meaning including "receiving," "transmitting," "storing," "correcting," and "deleting" data.

In the detailed descriptions of the present disclosure, "an element A and/or an element B" refers to "an element A," "an element B," or "an element A and an element B."

In the detailed descriptions of the present disclosure, a "computer" includes a computer processor, a memory device, an operating system, firmware, application programs, a network interface, an input and output interface, a bus, and resources. Herein, the operating system operatively connects other hardware, firmware, or application programs (for example, a management program). The network interface is to communicate with the outside, and refers to a module including software and hardware, and may be, for example, a local area network (LAN) card for communication. The memory device is a recording medium that has a program recorded thereon and is readable by a computer, and for example, may include a memory or a permanent storage device, which will be described below. In addition, the computer processor, the memory device, the operating system, the firmware, the application programs, the network interface, the input and output interface, the bus, and other resources are operatively connected with one another. The above-mentioned elements are described or illustrated in the detailed descriptions or drawings within a limit for explanation of the present disclosure.

In the detailed descriptions of the present disclosure, an element "A" transmitting information, a history, and/or data to an element "B" includes the element "A" directly transmitting to the element "B" or the element "A" transmitting to the element "B" through at least one other element.

In the detailed descriptions of the present disclosure, the term "Bluetooth device" refers to a device that is provided with a wireless LAN card to perform wireless communication called Bluetooth.

Hereinafter, embodiments of the present disclosure will be described in detail with reference to the drawings.

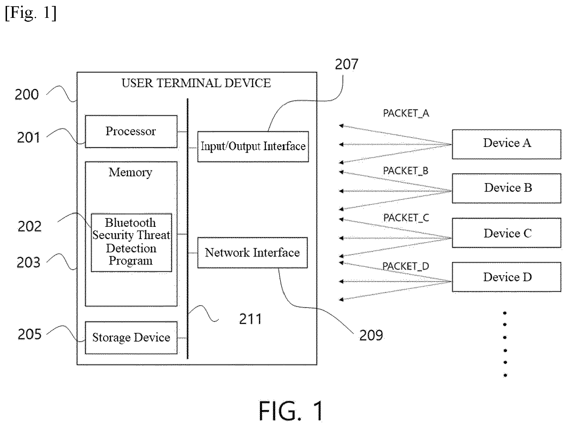

FIG. 1 is a view provided to explain a Bluetooth security threat detection system according to an embodiment of the present disclosure.

Referring to FIG. 1, the Bluetooth security threat detection system according to an embodiment includes a user terminal device 200 which has a program (hereinafter, a "Bluetooth security threat detection program 202") installed therein to execute a Bluetooth security threat detection method in the user terminal device 200. For the purpose of explaining the present disclosure, FIG. 1 additionally illustrates Bluetooth devices A, B, C, D.

The user terminal device 200 includes a processor 201, a memory 203, a permanent storage device 205, an input and output interface 207, and a network interface 209. The user terminal device 200 refers to a computer, and for example, may be a device such as a desktop computer, a notebook computer, a smartphone, or a PDA.

The processor 201 is an element for performing the Bluetooth security threat detection method, and may include a certain device that can process a sequence of instructions, or a portion of the device. The processor 201 may include, for example, a computer processor, a processor and/or a digital processor within a mobile device or other electronic devices. The processor 201 may be included in, for example, a server computing device, a server computer, a plurality of server computers, a server farm, a cloud computer, a content platform, etc. The processor 201 may connect to the memory 203 through a bus 211.

The memory 203 may include a volatile memory, a permanent memory, a virtual memory, or other memories to be used by the user terminal device 200 or to store information outputted therefrom. The memory 203 may include, for example, a random access memory (RAM) and/or a dynamic RAM (DRAM).

The memory 203 may be used to store certain information such as state information of the user terminal device 200. The memory 203 may be used to store instructions of the user terminal device 200 which include instructions to perform the Bluetooth security threat detection method, for example. The user terminal device 200 may include one or more processors when necessary or appropriate.

The bus 211 may include a communication-based structure that enables interaction between various elements of the user terminal device 200. The bus 211 may carry data between elements of the user terminal device 200, for example, between the processor 201 and the memory 203. The bus 211 may include a wireless and/or wired communication medium between elements of the user terminal device 200, and may include parallel, serial or other topology arrangements.

The permanent storage device 205 may include elements which are used by the user terminal device 200 to store data during a predetermined duration (for example, a duration extended in comparison to the memory 230), like the memory 203 or other permanent storage devices 205. The permanent storage device 205 may include a nonvolatile main memory which is used by the processor 201 in the user terminal device 200. The permanent storage device 205 may include, for example, a flash memory, a hard disk, an optical disk, or other computer-readable media.

The input and output interface 207 may include interfaces for a keyboard, a mouse, a voice command input, a display, or other input or output devices. Configuration commands and/or an input for the Bluetooth security threat detection method may be received through the input and output interface 207.

The network interface 209 may include one or more interfaces for networks such as a short-range network or the Internet. The network interface 209 may include interfaces for wired or wireless connections. In the present embodiment, the network interface 209 may include an interface for wireless communication of Bluetooth (for example, a wireless LAN card for Bluetooth communication). Configuration commands and/or an input for the Bluetooth security threat detection method may be received through the network interface 209.

According to the present embodiment, the Bluetooth security threat detection program 202 may be loaded into the memory 203 and may be executed under control of the processor 201. The Bluetooth security threat detection program 202 may be stored in the permanent storage device 205, and may be loaded into the memory 203 and executed under control of the processor 201. Alternatively, at least a portion or an entirety of the Bluetooth security threat detection program 202 may be stored in a permanent storage device (not shown) connected with the user terminal device 200 through a network such as a short-range network or the Internet, and may be downloaded into the user terminal device 200 upon receipt of a request of the user terminal device 200 and then may be loaded into the memory 203 and executed under control of the processor 201.

In an alternative embodiment, the user terminal device 200 may include more elements than those illustrated in FIG. 1. However, it will be understood by those skilled in the art that most of the related-art technical elements are not illustrated in FIG. 1 since they do not need to be illustrated clearly. For example, the user terminal device 200 may be implemented to include at least some of input and output devices connected with the input and output interface 207, or may further include other elements, such as a transceiver, a GPS module, a camera, various sensors like a geomagnetic sensor or an acceleration sensor, and a database.

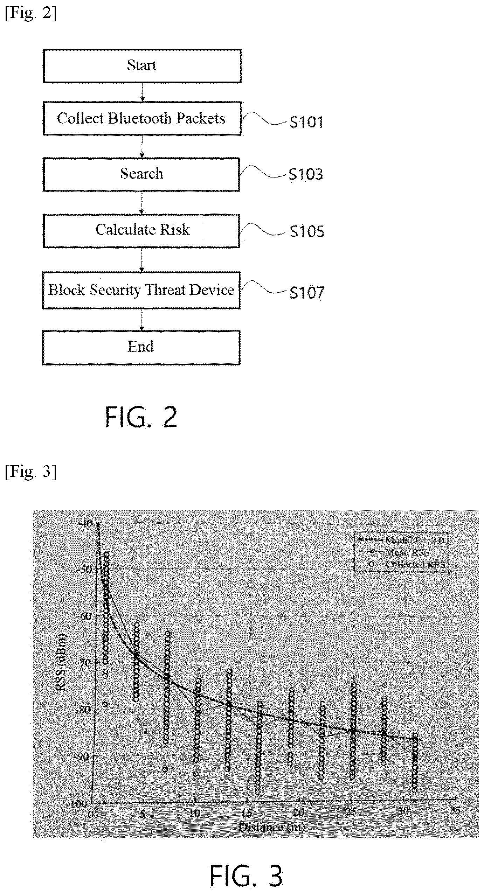

FIG. 2 is a view provided to explain a Bluetooth security threat detection method in a computer according to an embodiment, and FIG. 3 is a view illustrating a result of testing a relationship between a Bluetooth RSSI value and a distance. Hereinafter, the Bluetooth security threat detection method performed by the Bluetooth security threat detection program 202 will be described with reference to FIGS. 1 to 3.

According to an embodiment, the Bluetooth security threat detection method includes: a step of collecting Bluetooth packets transmitted from devices (S101); a searching step of finding Bluetooth packets (device name duplication Bluetooth packets) having the same device name, by comparing information included in Bluetooth packets collected at the same time period from among the collected Bluetooth packets (S103); and a step of calculating an index (degree of risk) indicating a degree of risk of a risky device, with respect to each of the devices which have transmitted Bluetooth packets, based on a result of the searching step (S103) (S105). The Bluetooth security threat detection method may further include a security threat device blocking step (S107) which informs a user of security threat devices, based on the degree of risk calculated according to a result of the risk calculation step (S105), and blocks Bluetooth connection.

For example, the step of calculating the risk (S105) may include an operation (a first operation) of increasing a degree of risk of at least one device of the devices (device name duplications devices) which have transmitted the device name duplication Bluetooth packets.

For example, the step of collecting (S101) may be an operation of receiving Bluetooth packets transmitted from Bluetooth devices.

For example, the Bluetooth device A may provide its own Bluetooth packet PACKET_A to the user terminal 200 by broadcasting the Bluetooth packet PACKET_A, or may connect to the user terminal device 200 and may provide its own Bluetooth packet PACKET_A to the user terminal 200. In the detailed descriptions of the present disclosure, transmitting the Bluetooth packets is not limited to a specific transmission method, and may include any method such as a broadcasting method or a connecting method.

For example, the searching step (S103) includes an operation of comparing information included in the Bluetooth packets collected at the same time period from among the collected Bluetooth packets. The operation of comparing may include comparing the Bluetooth packet PACKET_A transmitted by the device A, a Bluetooth packet PACKET_B transmitted by the device B, a Bluetooth packet PACKET_C transmitted by the device C, a Bluetooth packet PACKET_D transmitted by the device D. The Bluetooth packet A may include a device name, a media access control (MAC) address, a Bluetooth connection state, a class of device, a device supporting service, a Bluetooth type, an RSSI, and manufacturer data.

The same time period refers to a period of time that is pre-set by the user, like 10:00 a.m.-11:00 a.m. on November 7, 2019. The time 10:00 a.m.-1 1:00 a.m. on November 7, 2019 is merely an example, and a shorter or longer time period may be set.

The searching step (S103) includes an operation of comparing information included in all Bluetooth packets collected at the same time period, and finding whether at least one of the device name, the MAC address, the Bluetooth connection state, the class of device, the device supporting service, the Bluetooth type, the RSSI, and the manufacturer is the same. Herein, the "manufacturer" refers to a manufacturer of a wireless LAN card for Bluetooth communication installed in the devices, the "MAC address" refers to a unique identifier assigned to the wireless LAN card, the "RSSI" refers to a strength of a signal of each packet when the network work interface 209 receives the Bluetooth packets, the "class of device" refers to a kind of device of the Bluetooth device (for example, a personal computer (for example, a notebook computer), a smartphone, etc.), and the "device name" refers to a name given to a device.

The searching step (S103) may include an operation of comparing information included in all Bluetooth packets collected at the same time period, and finding whether there are Bluetooth packets (hereinafter, "device name duplication Bluetooth packets") having the same "device name." When devices (hereinafter, "device name duplication devices") having transmitted the Bluetooth packets having the same "device name" are found as a result of searching, degrees of risk of the device name duplication devices may increase. For example, if the device name of the device A and the device name of the device C are the same as each other, any one of the degree of risk of the device A and the degree of risk of the device C may further increase. This is because any one of the device A and the device C may be a fake device created by a hacker.

For example, the searching step (S103) may further include at least one of operations: (i) an operation of comparing information included in the Bluetooth packets collected at the same time period from among the Bluetooth packets PACKET_A, PACKET_B, PACKET_C, PACKET_D, and finding whether there are Bluetooth packets (manufacturer duplication Bluetooth packets) having the same 'manufacturer', and (ii) an operation of comparing information included in the Bluetooth packets collected at the same time period from among the Bluetooth packets PACKET_A, PACKET_B, PACKET_C, PACKET_D, and finding whether there are Bluetooth packets (MAC address duplication Bluetooth packets) having the same "MAC address." When devices (hereinafter, "manufacturer duplication devices") having transmitted the Bluetooth packets having the same "manufacturer" and/or devices (hereinafter, "MAC address duplication devices") having transmitted the Bluetooth packets having the same "MAC address" are found as a result of searching, the degrees of risk of the manufacturer duplication devices and the MAC address duplication devices may increase.

For example, if the manufacturer of the device B and the manufacturer of the device D are the same as each other, any one of the degrees of risk of the device B and the device D may further increase. This is because any one of the device B and the device D may be a fake device created by a hacker. In another example, if the MAC address of the device B and the MAC address of the device D are the same as each other, any one of the degrees of risk of the device B and the device D may further increase.

For example, the searching step (S103) may further include an operation of finding a device the class of which is a personal computer, from among the device name duplication devices. The searching step (S103) may perform the operation of finding the device name duplication devices and then perform the operation of determining whether the "class of device" included in the Bluetooth packets of the found device name duplication devices indicates a personal computer. When there exists a device the class of which is a personal computer from among the device name duplication devices, the degree of risk of the device may increase. For example, if the device name of the device A and the device name of the device C are the same as each other, and the "class of device" of the device C is a personal computer, the degree of risk of the device C may increase.

For example, the searching step (S103) may further include at least one of operations: (i) an operation of finding a device the class of which is a personal computer from among the devices having transmitted the manufacturer duplication Bluetooth packets, and (ii) an operation of finding a device the class of which is a personal computer from among the devices having transmitted the MAC address duplication Bluetooth packets.

For example, the searching step (S103) may include an operation of, if the manufacturer of the device B and the manufacturer of the device D are the same as each other, finding a device the class of which is a personal computer from among the device B and the device D. In addition, the searching step (S 103) may include an operation of, if the MAC address of the device A and the MAC address of the device C are the same as each other, finding a device the class of which is a personal computer from among the device A and the device C. The searching step (S103) may include at least one of the operation of finding the device the class of which is the personal computer from among the device B and the device D having the same manufacturer, and the operation of finding the device the class of which is the personal computer from among the device A and the device C having the same MAC address.

When there exists a device the class of which is a personal computer from among the devices having transmitted the manufacturer duplication Bluetooth packets, the degree of risk of the device may increase. In addition, when there exists a device the class of which is a personal computer from among the devices having transmitted the MAC address duplication Bluetooth packets, the degree of risk of the device may increase.

For example, the searching step (S103) may further include an operation of finding a device when the "device name" of the information included in the collected Bluetooth packets PACKET_A, PACKET_B, PACKET_C, PACKET_D is longer than a pre-defined reference. For example, the pre-defined reference may be 10 syllable blocks or lower in Korean. For example, if the "device name" is ' 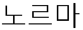 (no-reu-ma)', the device name has 3 syllable blocks, and ' 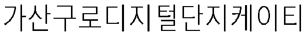 (ka-san-gu-ro-di-zi-tal-dan-ji-ke-i-ti) has 12 syllable blocks. The above-described 10 syllable blocks in Korean are merely an example and it will be understood by those skilled in the art that the present disclosure is not limited to such a reference. This reflects that a hacker may intentionally generate an overflow by elongating the length of a device name.

For example, the searching step (S103) may further include an operation of finding a device the "RSSI" value of which is lower than a pre-set reference value in the information included in the collected Bluetooth packets PACKET A, PACKET B, PACEKT_C, PACKET_D.

The pre-set reference value regarding the RSSI value may be, for example, -80 dBm. In this case, the searching step (S103) performs an operation of finding devices the RSSI of which is less than or equal to -80 dBm, in the information included in the collected Bluetooth packets PACKET_A, PACKET_B, PACEKT_C, PACKET_D. As will be described, the step of calculating the risk (S105) may increase a degree of risk of the device the RSSI value of which is lower than the pre-set reference value. For example, the degree of risk may increase by 3.

For example, the searching step (S103) may further include an operation of finding a device the RSSI value of which changes by more than a pre-set change value, in the information included in the collected Bluetooth packets PACKET_A, PACKET_B, PACEKT_C, PACKET_D. The pre-set change value may be, for example, ±20 dBm. In this case, the searching step (S103) may perform the operation of finding devices the RSSI of which changes by more than ±20 dBm, in the information included in the collected Bluetooth packets PACKET_A, PACKET_B, PACEKT_C, PACKET_D. As will be described below, the step of calculating the risk (S105) may increase a degree of risk of the device the RSSI value of which changes by more than the pre-set change value. For example, the degree of risk may increase by 3.

Referring to FIG. 3, a relationship between an RSSI value and a distance to a Bluetooth device (a distance between the user terminal device 200 and a Bluetooth device) can be seen. The present embodiment reflects the experiential result that the probability of threatening security increases as the distance between the Bluetooth device and the user terminal device 200 collecting Bluetooth packets increases, and a change in the RSSI value is greater.

For example, the step of collecting (S101) may include an operation of collecting Bluetooth packets PACKET_A, PACKET_B, PACKET_C, PACKET_D transmitted from the devices A, B, C, D at a first time, and an operation of collecting Bluetooth packets PACKET'_A, PACKET'_B, PACKET'_C, PACKET'_D transmitted from the devices A, B, C, D at a second time which is different from the first time.

For example, the searching step (S103) may further include an operation of finding a device the information of which is changed, by comparing information included in the Bluetooth packets collected at the first time and information included in the Bluetooth packets collected at the second time. When the device the information of which is changed is found as a result of performing the searching step (S103), the step of calculating the risk (S105) may further include an operation of increasing a degree of risk of the device the information of which is changed.

In the present embodiment, information to be compared may be at least one of the device name, MAC address, Bluetooth connection state, class of device, device supporting service, Bluetooth type, RSSI, and manufacturer data included in the Bluetooth packets PACKET'_A, PACKET'_B, PACKET'_C, PACKET'_D. Specifically, the first time may be 10:00 a.m. to 11:00 a.m. on November 7, 2019, and the second time may be 12:00 p.m. to 1:00 p.m. on November 7, 2019. This is to detect a hacker who is not at the first time and appears at the second time. That is, this is to detect that a device (threatening device) of a hacker appearing at the second time hacks into another device, and copies information of the hacked device.

For example, the step of calculating the risk (S105) may be a step of calculating a degree of risk of each of the devices A, B, C, D from which the Bluetooth packets PACKET_A, PACKET_B, PACKET_C, PACKET_D are collected. The step of calculating the risk (S105) may be a step (S105) of calculating degrees of risk of the manufacturer duplication devices, the device name duplication devices, the MAC address duplication devices, the devices the information of which is changed according to a change in time, the devices the RSSI value of which is less than or equal to the reference value, and the devices the RSSI value of which is changed by more than the pre-set change value, from among the devices A, B, C, D from which the Bluetooth packets PACKET_A, PACKET_B, PACKET_C, PACKET_D are collected.

According to an embodiment, the degree of risk may be classified into "low," "high," and "highest," and "low" may be given when a risk score is 0 to 4, "high" may be given when a risk score is 5 to 9, and "highest" may be given when a risk score is 10 or higher.

For example, the step of calculating the risk (S105) may increase a risk score of a corresponding device by a pre-defined score, every time that the device is found as corresponding to the manufacturer duplication device, the device name duplication device, the MAC address duplication device, the device the information of which is changed according to a change in time, the device the RSSI value of which is less than or equal to the reference value, the device the RSSI value of which is changed by more than the pre-set change value.

The above-described method for classifying the degree of risk or calculating the score is merely an example, and the present disclosure is not limited thereto. Information on the degree of risk may be stored in the memory 203 or the permanent storage device 205.

For example, the step of calculating the risk (S105) may include an operation (first operation) of increasing a degree of risk of at least one device from among the device name duplication devices. Herein, the first operation may be an operation of, when there is a device the class of which is a personal computer, from among the device name duplication devices, as a result of performing the searching step (S103), increasing the degree of risk of such a device. More specifically, the first operation may be an operation of increasing the degree of risk of a device by 10 scores if the device is a name duplication device and its class is the personal computer.

For example, the step of calculating the risk (S105) may further include at least one of operations: (i) an operation (second operation) of increasing a degree of risk of a device the class of which is a personal computer, from among the manufacturer duplication devices found as a result of performing the searching step (S103), and (ii) an operation (third operation) of increasing a degree of risk of a device the class of which is a personal computer, from among the MAC address duplication devices. That is, the second operation may be an operation of increasing the degree of risk of the device which is the manufacturer duplication device and the class of which is the personal computer, and the third operation may be an operation of increasing the degree of risk of the device which is the MAC address duplication device and the class of which is the personal computer. Specifically, the second operation may be an operation of increasing the degree of risk of a device by 3 scores if the device is a manufacturer duplication device and its class is the personal computer, and the third operation may be an operation of increasing the degree of risk of a device by 10 scores if the device is a MAC address duplication device and its class is the personal computer.

For example, the step of calculating the risk (S105) may further include an operation (fourth operation) of, when a device having a "device name" longer than the pre-defined reference is found based on information included in the Bluetooth packets PACKET_A, PACKET_B, PACKET_C, PACKET_D, as a result of performing the searching step (S103), increasing the degree of risk of such a device.

That is, the fourth operation may increase the degree of risk differently according to how long the "device name" is in comparison to the pre-defined reference. For example, if the pre-defined reference is 10 syllable blocks in Korean, the step of calculating the risk (S105) may increase the degree of risk by 3 when the length of the "device name" is longer than or equal to 24 syllable blocks and is less than 50 syllable blocks, and may increase the degree of risk by 5 when the length of the "device name" is longer than or equal to 50 syllable blocks.

For example, the step of calculating the risk (S105) may further include an operation (fifth operation) of, when there is difference between the information included in the Bluetooth packets PACKET_A, PACKET_B, PACKET_C, PACKET_D collected at the first time and the information included in the Bluetooth packets PACKET'_A, PACKET'_B, PACKET'_C, PACKET'_D collected at the second time, as a result of performing the searching step (S103), that is, when there is a device the information of which in the information included in the Bluetooth packets PACEKT_A, PACKET_B, PACKET_C, PACKET_D is changed according to a change in time, increasing the degree of risk of the device the information of which is changed. For example, the fifth operation may be an operation of increasing the risk of the device the information of which is changed by 10. The changed information may be, for example, any one of the device name, MAC address, Bluetooth connection state, class of device, device supporting service, Bluetooth type, RSSI, and manufacturer data.

For example, the step of calculating the risk (S105) may increase the degree of risk of a device in which the RSSI value of the collected Bluetooth packet PACKET_A, PACKET_B, PACKET_C, PACKET_D is lower than the pre-set reference value. For example, the degree of risk may increase by 3.

For example, the step of calculating the risk (S105) may increase the degree of risk of a device in which the RSSI value of the collected Bluetooth packet PACKET_A, PACKET_B, PACKET_C, PACKET_D is changed by more than the pre-set change value. For example, the degree of risk may increase by 3.

For example, the value (for example, "3" or "10") applied when the degree of risk increases at the step of calculating the risk (S105) is merely an example, and other values may be applied.

The scope of the present disclosure is defined not by the detailed descriptions of the present disclosure but by the appended claims, and all differences within the scope will be construed as being included in the present disclosure.

## Claims

1. A computer readable medium having a program recorded thereon to execute a Bluetooth security threat detection method in a computer, the Bluetooth security threat detection method comprising:
a step (S101) of collecting Bluetooth packets transmitted from devices;
a searching step (S103) of comparing information included in Bluetooth packets collected at the same time period from among the collected Bluetooth packets, and finding device name duplication Bluetooth packets having a same device name;
a step (S105) of calculating a degree of risk indicating a degree of risk of a risky device, with respect to each of the devices which transmit the Bluetooth packets, based on a result of the searching step,
wherein the step of calculating the degree of risk comprises a first operation of increasing a degree of risk of at least one device from among device name duplication devices which transmit the device name duplication Bluetooth packets; and
informing a user of security threat devices, based on the degree of risk.

2. The computer readable medium of claim 1, wherein the searching step comprises at least one of:
an operation of comparing the information included in the Bluetooth packets collected at the same time period from among the Bluetooth packets, and finding manufacturer duplication Bluetooth packets having a same manufacturer; and
an operation of comparing the information included in the Bluetooth packets collected at the same time period from among the Bluetooth packets, and finding MAC address duplication Bluetooth packets having a same MAC address,
wherein the manufacturer refers to a manufacturer of a wireless LAN card installed in the devices for Bluetooth communication, and the MAC address refers to a unique identifier assigned to the wireless LAN card.

3. The computer readable medium of claim 1, wherein the searching step further comprises an operation of finding a device a class of which is a personal computer from among the device name duplication devices, and
wherein the first operation comprises increasing a degree of risk of the device the class of which is the personal computer from among the device name duplication devices.

4. The computer readable medium of claim 2, wherein the searching step further comprises at least one of an operation of finding a device a class of which is a personal computer from among the devices which transmit the manufacturer duplication Bluetooth packets, and an operation of finding a device a class of which is a personal computer from among the devices which transmit the MAC address duplication Bluetooth packets, and
wherein the step of calculating the degree of risk further comprises at least one of:
a second operation of increasing a degree of risk of the device the class of which is the personal computer from among the devices which transmit the manufacturer duplication Bluetooth packets; and
a third operation of increasing a degree of risk of the device the class of which is the personal computer from among the devices which transmit the MAC address duplication Bluetooth packets.

5. The computer readable medium of claim 1, wherein the searching step further comprises an operation of finding a device a device name of which is longer than a pre-defined reference, in the information included in the collected Bluetooth packets, and
wherein the step of calculating the degree of risk further comprises a fourth operation of increasing a degree of risk of the device the device name of which is longer than the pre-defined reference.

6. The computer readable medium of claim 1, wherein the step of collecting comprises an operation of collecting Bluetooth packets transmitted from the devices at a first time, and an operation of collecting Bluetooth packets transmitted from the devices at a second time which is different from the first time,
wherein the searching step further comprises an operation of comparing information included in the Bluetooth packets collected at the first time and information included in the Bluetooth packets collected at the second time, and finding a device information of which is changed,
wherein the step of calculating the degree of risk further comprises a fifth operation of increasing a degree of risk of the device the information of which is changed.

## Patentansprüche

1. Computerlesbares Medium, auf dem ein Programm zum Ausführen eines Verfahrens für Erfassung von Bluetooth-Sicherheitsbedrohung in einem Computer gespeichert ist, wobei das Verfahren für Erfassung von Bluetooth-Sicherheitsbedrohung umfasst:
einen Schritt (S101), in dem von Geräten übertragene Bluetooth-Pakete gesammelt werden;
einen Such-Schritt (S103), in dem Informationen, die in Bluetooth-Paketen enthalten sind, die in dem gleichen Zeitraum gesammelt werden, unter den gesammelten Bluetooth-Paketen verglichen werden, und Bluetooth-Pakete mit Gerätenamen-Duplikaten ermittelt werden, die den gleichen Gerätenamen haben;
einen Schritt (S105), in dem ein Gefährdungsgrad, der einen Gefährdungsgrad eines gefährdeten Gerätes anzeigt, in Bezug auf jedes der Geräte, die die Bluetooth-Pakete übertragen, auf Basis eines Ergebnisses des Such-Schrittes berechnet wird,
wobei der Schritt, in dem der Gefährdungsgrad berechnet wird, einen ersten Vorgang umfasst, in dem ein Gefährdungsgrad wenigstens eines Gerätes unter den Geräten mit Gerätenamen-Duplikaten erhöht wird, die die Bluetooth-Pakete mit Gerätenamen-Duplikaten übertragen; und
Informieren eines Benutzers über Geräte, die eine Sicherheitsbedrohung darstellen, auf Basis des Gefährdungsgrades.

2. Computerlesbares Medium nach Anspruch 1, wobei der Such-Schritt umfasst:
einen Vorgang, in dem die Informationen, die in den Bluetooth-Paketen enthalten sind, die in dem gleichen Zeitraum gesammelt werden, unter den Bluetooth-Paketen verglichen werden und Bluetooth-Pakete mit Hersteller-Duplikaten ermittelt werden, die den gleichen Hersteller haben; oder/und
einen Vorgang, in dem die Informationen, die in den Bluetooth-Paketen enthalten sind, die in dem gleichen Zeitraum gesammelt werden, unter den Bluetooth-Paketen verglichen werden und Bluetooth-Pakete mit MAC-Adressen-Duplikaten ermittelt werden, die die gleiche MAC-Adresse haben,
wobei sich der Hersteller auf einen Hersteller einer WLAN-Karte bezieht, die in den Vorrichtungen für Bluetooth-Kommunikation installiert ist, und die MAC-Adresse sich auf eine eindeutige Kennung bezieht, die der WLAN-Karte zugewiesen ist.

3. Computerlesbares Medium nach Anspruch 1, wobei der Such-Schritt des Weiteren einen Vorgang umfasst, in dem ein Gerät, dessen Klasse ein Personal Computer ist, unter den Geräten mit Gerätenamen-Duplikaten ermittelt wird, und
der erste Vorgang Erhöhen eines Gefährdungsgrades des Gerätes unter den Geräten mit Gerätenamen-Duplikaten umfasst, dessen Klasse der Personal Computer ist.

4. Computerlesbares Medium nach Anspruch 2, wobei der Such-Schritt des Weiteren einen Vorgang, in dem unter den Geräten, die die Bluetooth-Pakete mit Hersteller-Duplikaten übertragen, ein Gerät ermittelt wird, dessen Klasse ein Personal-Computer ist, oder/und einen Vorgang umfasst, in dem unter den Geräten, die die Bluetooth-Pakete mit MAC-Adressen-Duplikaten übertragen, ein Gerät ermittelt wird, dessen Klasse ein Personal-computer ist, und
der Schritt zum Berechnen des Gefährdungsgrades des Weiteren umfasst:
einen zweiten Vorgang, in dem ein Gefährdungsgrad des Gerätes, dessen Klasse der Personal Computer ist, unter den Geräten erhöht wird, die die Bluetooth-Pakete mit Hersteller-Duplikaten übertragen; oder/und
einen dritten Vorgang, in dem ein Gefährdungsgrad des Gerätes, dessen Klasse der Personal Computer ist, unter den Geräten erhöht wird, die die Bluetooth-Pakete mit MAC-Adressen-Duplikaten übertragen.

5. Computerlesbares Medium nach Anspruch 1, wobei der Such-Schritt des Weiteren einen Vorgang umfasst, in dem ein Gerät, dessen Gerätename länger ist als ein vordefinierter Bezugswert, in den in den gesammelten Bluetooth-Paketen enthaltenen Informationen ermittelt wird, und
der Schritt zum Berechnen des Gefährdungsgrades des Weiteren einen vierten Vorgang umfasst, in dem ein Gefährdungsgrad des Gerätes erhöht wird, dessen Gerätename länger ist als der vordefinierte Bezugswert.

6. Computerlesbares Medium nach Anspruch 1, wobei der Schritt des Sammelns einen Vorgang, in dem Bluetooth-Pakete gesammelt werden, die von den Geräten zu einer ersten Zeit übertragen werden, sowie einen Vorgang umfasst, in dem Bluetooth-Pakete gesammelt werden, die von den Vorrichtungen zu einer zweiten Zeit übertragen werden, die sich von der ersten Zeit unterscheidet,
der Such-Schritt des Weiteren einen Vorgang, in dem Informationen, die in den zu der ersten Zeit gesammelten Bluetooth-Paketen enthalten sind, mit Informationen verglichen werden, die in den zu der zweiten Zeit gesammelten Bluetooth-Paketen enthalten sind, sowie Ermitteln eines Gerätes umfasst, dessen Information sich geändert hat, und
der Schritt zum Berechnen des Gefährdungsgrades des Weiteren einen fünften Vorgang umfasst, in dem ein Gefährdungsgrad des Gerätes erhöht wird, dessen Information sich geändert hat.

## Revendications

1. Support lisible par un ordinateur présentant un programme enregistré sur celui-ci pour exécuter un procédé de détection de menaces pour la sécurité Bluetooth dans un ordinateur, le procédé de détection de menaces pour la sécurité Bluetooth comprenant :
une étape de collecte (S101) de paquets Bluetooth transmis depuis des dispositifs ;
une étape de recherche (S103) de comparaison d'informations incluses dans des paquets Bluetooth collectés sur la même période temporelle à partir des paquets Bluetooth collectés, et d'identification de paquets Bluetooth de duplication de nom de dispositif présentant un même nom de dispositif ;
une étape de calcul (S105) d'un niveau de risque indiquant un niveau de risque d'un dispositif à risque, par rapport à chacun des dispositifs qui transmettent les paquets Bluetooth, selon un résultat de l'étape de recherche,
dans lequel l'étape de calcul du niveau de risque comprend une première opération d'augmentation d'un niveau de risque d'au moins un dispositif parmi des dispositifs présentant une duplication de nom de dispositif qui transmettent les paquets Bluetooth de duplication de nom de dispositif ; et
une information d'un utilisateur de dispositifs induisant une menace pour la sécurité, selon le niveau de risque.

2. Le support lisible par un ordinateur de la revendication 1, dans lequel l'étape de recherche comprend au moins un de :
une opération de comparaison des informations incluses dans les paquets Bluetooth collectés sur la même période temporelle à partir des paquets Bluetooth, et d'identification de paquets Bluetooth de duplication de fabricant présentant un même fabricant ; et
une opération de comparaison des informations incluses dans des paquets Bluetooth collectés sur la même période temporelle à partir des paquets Bluetooth, et d'identification de paquets Bluetooth de duplication d'adresse MAC présentant une même adresse MAC,
dans lequel le fabricant fait référence à un fabricant d'une carte de réseau local (LAN) sans fil installée dans les dispositifs destinés à une communication Bluetooth, et l'adresse MAC fait référence à un identificateur unique affecté à la carte LAN sans fil.

3. Le support lisible par un ordinateur de la revendication 1, dans lequel l'étape de recherche comprend en outre une opération d'identification d'un dispositif dont une classe est un ordinateur personnel parmi les dispositifs présentant une duplication de nom de dispositif, et
dans lequel la première opération comprend une hausse d'un niveau de risque du dispositif dont la classe est l'ordinateur personnel parmi les dispositifs présentant une duplication de nom de dispositif.

4. Le support lisible par un ordinateur de la revendication 2, dans lequel l'étape de recherche comprend en outre au moins une d'une opération d'identification d'un dispositif dont une classe est un ordinateur personnel parmi les dispositifs qui transmettent les paquets Bluetooth de duplication de fabricant, et une opération d'identification d'un dispositif dont une classe est un ordinateur personnel parmi les dispositifs qui transmettent les paquets Bluetooth de duplication d'adresse MAC, et
dans lequel l'étape de calcul du niveau de risque comprend au moins un de :
une deuxième opération de hausse d'un niveau de risque du dispositif dont la classe est l'ordinateur personnel parmi les dispositifs qui transmettent les paquets Bluetooth de duplication de fabricant ; et
une troisième opération de hausse d'un niveau de risque du dispositif dont la classe est l'ordinateur personnel parmi les dispositifs qui transmettent les paquets Bluetooth de duplication d'adresse MAC.

5. Le support lisible par un ordinateur de la revendication 1, dans lequel l'étape de recherche comprend en outre une opération d'identification d'un dispositif dont un nom de dispositif est plus long qu'une référence prédéfinie, dans les informations incluses dans les paquets Bluetooth collectés, et
dans lequel l'étape de calcul du niveau de risque comprend en outre une quatrième opération de hausse d'un niveau de risque du dispositif dont le nom de dispositif est plus long que la référence prédéfinie.

6. Le support lisible par un ordinateur de la revendication 1, dans lequel l'étape de collecte comprend une opération de collecte de paquets Bluetooth transmis depuis les dispositifs à un premier moment, et une opération de collecte de paquets Bluetooth transmis depuis les dispositifs à un deuxième moment qui est différent du premier moment,
dans lequel l'étape de recherche comprend une opération de comparaison d'informations incluses dans les paquets Bluetooth collectés au premier moment et d'informations incluses dans les paquets Bluetooth collectés au deuxième moment, et d'identification d'un dispositif dont des informations sont changées,
dans lequel l'étape de calcul du niveau de risque comprend en outre une cinquième opération de hausse d'un niveau de risque du dispositif dont les informations sont changées.
